# EUROPÄISCHE PATENTSCHRIFT

(11) **EP 2 197 262 B1**
(45) Veröffentlichungstag und Bekanntmachung des Hinweises auf die Patenterteilung: **16.05.2018**
(21) Anmeldenummer: 08838418.5
(22) Anmeldetag: 19.09.2008
(51) Int. Cl.: A01G 9/02

(54) **PFLANZTOPF AUS KUNSTSTOFF**
PLASTIC PLANTPOT
POT DE PLANTATION EN MATIÈRE PLASTIQUE

(30) Priorität: 08.10.2007 DE 202007014037 U
(43) Veröffentlichungstag der Anmeldung: 23.06.2010
(73) Patentinhaber: Pöppelmann Holding GmbH & Co. KG., 49393 Lohne (DE)
(72) Erfinder: SCHMIDT, Guido, 49413 Dinklage (DE)
(74) Vertreter: Bünemann, Egon
(86) Internationale Anmeldenummer: PCT/EP2008/007863
(87) Internationale Veröffentlichungsnummer: WO 2009/046838

(56) Entgegenhaltungen:
- DE-U1- 20 109 317
- DE-U1-202005 012 314
- NL-C2- 1 020 443
- US-A1- 2002 174 599

## Beschreibung

Die Erfindung betrifft einen Pflanztopf aus Kunststoff nach dem Oberbegriff des Anspruchs 1.

Pflanztöpfe dieser Art sind für den Erwerbsgartenbau allgemein mit einem Boden versehen, der Öffnungen für eine effektive Entwässerung auch bei zeitweilig überschüssiger Bewässerung sorgt und unterseitig einen Abstand gegenüber einer Aufstellfläche zum Wasserablauf und zur Belüftung einhält. Eine Schwallbewässerung mittels Brausebewässerung von oben oder eine sogenannte "Ebbe- und Flut-Bewässerung", bei der die Pflanztöpfe von Zeit zu Zeit von unten geflutet werden, sorgt zunächst für einen über den Feuchtigkeitsbedarf hinausgehenden Wassereintrag, der sich durch den Ablauf überschüssigen Wassers reduziert. Zur Vermeidung von Staunässe ist insbesondere ein bodenseitiger Wasserablauf auch dann sicherzustellen, wenn der Pflanztopf auf einer wasserbenetzten oder sogar mit Wasserlachen versehenen Aufstellfläche steht. Dies ist typischerweise in Betracht zu ziehen, wenn die Pflanztöpfe auf Betonböden angeordnet sind, die bei überschüssiger Bewässerung in Bodenunebenheiten Pfützen bilden.

Da die Pflanztöpfe für den Erwerbsgartenbau aus Gründen der Kosten- und Materialersparnis dünnwandig ausgebildet werden und da der Boden solcher Pflanztöpfe aufgrund von Befüllung, Bepflanzung oder Wurzeldruck nach unten hin durchhängen kann, hat man bereits die Böden derartiger Pflanztöpfe zumindest in einem inneren Teilbereich kuppelartig ; aufgewölbt, siehe z.B. die Offenbarungen NL-C2-1020443 und DE 20109317 U1. Außenliegende Bereiche des Boden sind dabei durch die angrenzende Wandung stabilisiert und meist auch noch durch Fortsätze wie Randstege oder Noppen hochgestellt. Die Aufwölbungen sind relativ flach zu halten, um wenig an Topfraum preiszugeben und nicht etwa zerklüftete Randbereiche im Topf zu schaffen. Dies führt allerdings auch dazu, dass bei einer nachdrücklichen Befüllung des Topfes mit Substrat und dgl. Material und insbesondere auch beim Einstecken von Rankstäben und dgl. ein unerwünschtes Durchdrücken und Durchbeulen eintreten kann. Damit wird dann die Entwässerung und die Standfestigkeit des Pflanztopfs hinfällig.

Aufgabe der Erfindung ist es dementsprechend, einen Pflanztopf mit einem Boden zu schaffen, der in herkömmlicher Weise dünnwandig ausgebildet und mit gebräuchlichen großserientechnischen Mitteln hergestellt werden kann, der aber eine gegen ein Durchdrücken und Durchbeulen gesicherten Bodenbereich in Form einer aufgewölbten Kuppel aufweist.

Gemäß der Erfindung wird diese Aufgabe von einem Pflanztopf nach dem Oberbegriff des Anspruchs 1 ausgehend mit dessen kennzeichnenden Merkmalen gelöst. Mit den Profilstreben läßt sich die Kuppelform erheblich versteifen und gegen ein Durchbeulen nach unten absichern. Druckkräfte auf die Kuppel und den sonstigen Boden, die etwa beim Einfüllen von Pflanzsubstrat, beim Einsetzen von Pflanzen oder auch - mehr punktuell - beim Einstecken von Rankstäben oder Stützstäben für die Pflanzen auf-treten, werden nur zu einem geringeren Teil durch Beul- und Biegekräfte innerhalb der Kuppelschale, im Wesentlichen als Zugkräfte (Längskräfte) von den Profilstreben aufgenommen. Diese leiten die entsprechenden Kräfte als Längskräfte zu den Umfangsbereichen ab, die durch die Wandung des Pflanztopfs von Haus aus ausgesteift sind.

Die Profilstreben sind als oberseitig offene Hohlprofile ausgebildet, die zwischen Sektoren der Kuppel eingeformt sind. Es ergibt sich dann eine durchgängige Schalenform mit als Hohlprofil eingeformten Profilstreben. Eine solche Ausführungsform ist in Großserie sowohl bei spritzgußgeformten wie auch tiefgezogenen Pflanztöpfen verwendbar.

Zweckmäßig kann die Kuppel punktsymmetrisch bezüglich des mittleren Bereichs ausgestaltet sein, so dass die Profilstreben radial oder jedenfalls punktsymmetrisch verlaufen. Der mittlere Bereich kann als Einsenkung bis auf die Höhe der Profilstreben ausgebildet werden, um einerseits die Profilstreben zentral miteinander in einer Höhe zu verbinden, andererseits auch in Verbindung mit einem Loch mit mehreren Löchern einen Wasserablauf herzustellen.

Zwei Ausführungsbeispiele sind in der Zeichnung dargestellt und werden nachfolgend näher beschrieben. In der Zeichnung zeigen:
Fig. 1 Seitenansicht eines nicht-erfindungsgemäßen Pflanztopfs, zur Hälfte als Schnitt,
Fig. 2 Ansicht des Pflanztopfs schräg von oben,
Fig. 3 Ansicht des Pflanztopfs schräg von unten,
Fig. 4 Unteransicht des Pflanztopfs und
Fig. 5 Schnitt nach V - V in Fig. 4, im Maßstab 2 : 1 vergrößert,
Fig. 6 Seitenansicht einer erfindungsgemäßen Ausführungsform eines Pflanztopfs,
zur Hälfte als Schnitt,
Fig. 7 Ansicht des Pflanztopfs nach Fig. 6 schräg von oben,
Fig. 8 Ansicht des Pflanztopfs nach Fig. 6 und 7 schräg von unten
Fig. 9 Unteransicht des Pflanztopfs nach Fig. 6 bis 9
Fig. 10 Schnitt nach Linie X - X in Fig. 8, im Maßstab 2 : 1 vergrößert.

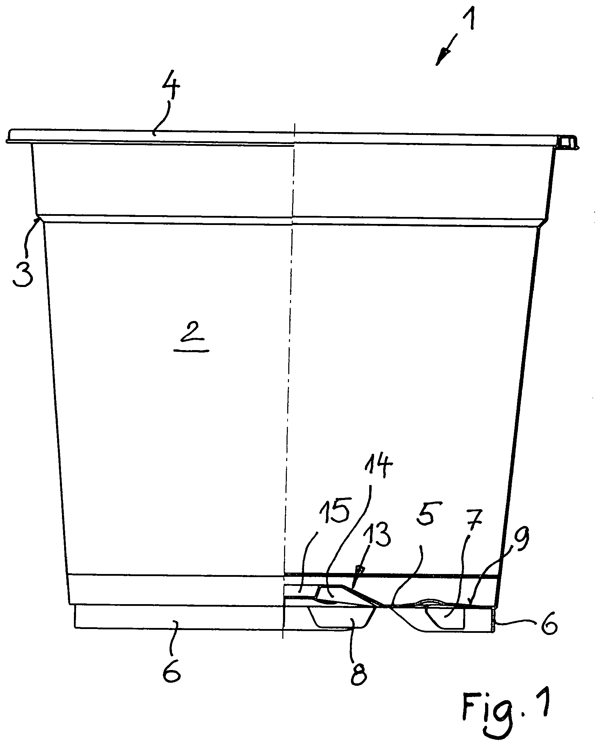

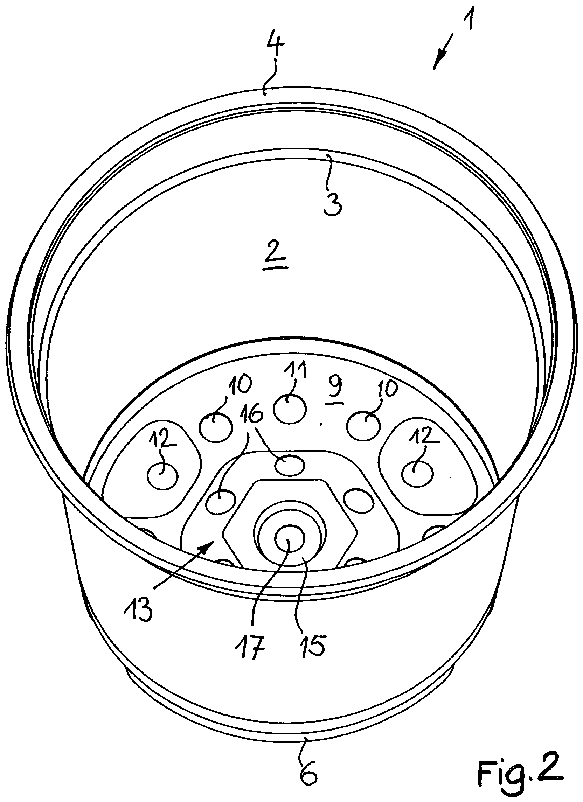

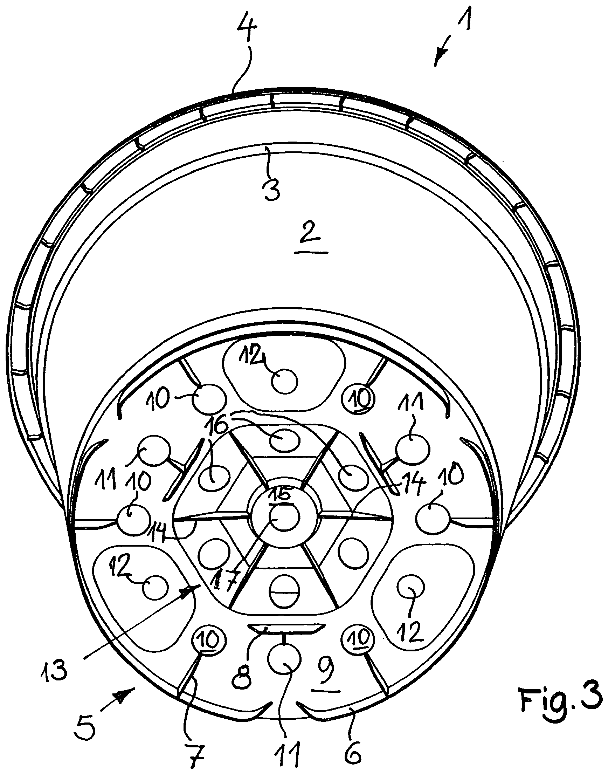

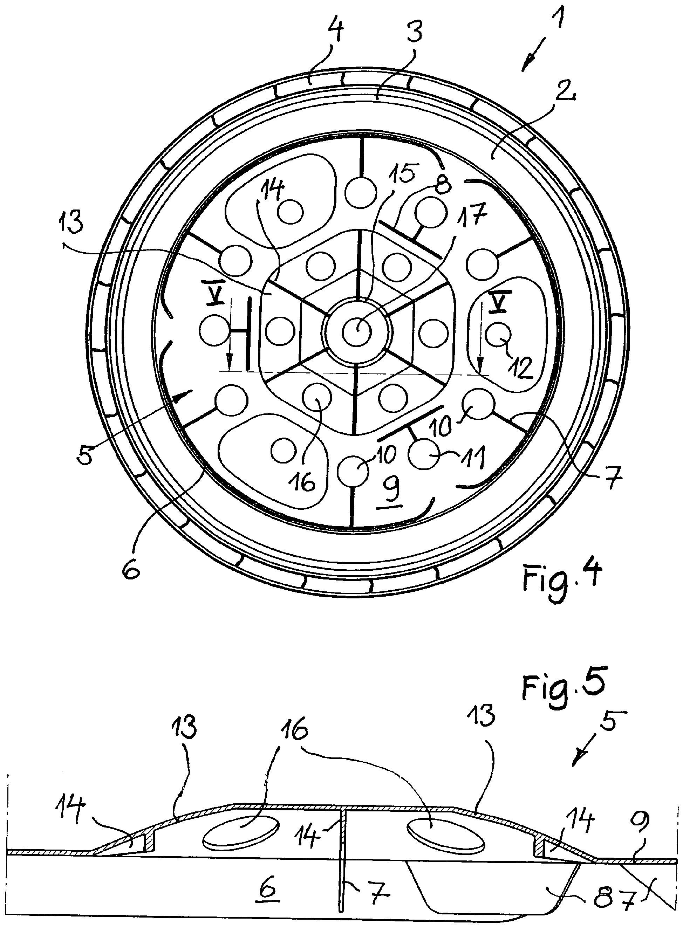

Ein in Fig. 1 bis 4 insgesamt 1 bezeichneter Pflanztopf hat eine gebräuchliche, im wesentlichen kegelstumpfförmige Grundform mit einer Wandung 2, die nach oben hin noch einmal durch einen schmalen Sims 3 ausgestellt und ausgesteift ist und in einen nach außen ragenden Rand 4 übergeht. Unterseitig ist ein Boden 5 über Randstege 6 aufgestellt. Weitere stegartige Fortsätze 7, die mit den Randstegen 6 rechtwinklig verbunden sind und diese innenseitig abstützen, verlaufen vorwiegend radial unter dem Boden 5. T-förmige Stegfortsätze sind unter einem flachen Umfangsbereich 9 des Bodens 5 als Aufstellfüße angeordnet. Soweit aus Fig. 1 noch ersichtlich ist, dass die Stegfortsätze 8 leicht verkürzt ausgebildet sind, womit bereits ein gewisses Durch-hängen des Bodens nach dem Befüllen des Topfes berücksichtigt und in jedem Fall auch ein Aufstehen des Topfes 1 auf den Randstegen 6 gewährleistet wird. In dem flachen Umfangsbereich 9 ist ein Kranz von Löchern für den Wasserablauf angeordnet, wobei die Stege 7 und 8 jeweils mit schrägen Ablaufkanten an die Löcher 10, 11 bzw. 12 herangeführt sind, um einen möglichst vollständigen Wasserablauf zu ermöglichen und hängende Tropfen zu vermeiden. Die Löcher 10, 11, 12 sind mit dem Umfangsbereich 9 besonders tiefliegend und dementsprechend für die (vollständige) Entwässerung besonders wichtig.

In einem mittleren Bereich des Bodens 5 ist eine flache Kuppel 13 hochgewölbt, um den Boden auch dann verlässlich von einer Aufstellfläche für den Pflanztopf 1 abzusetzen, wenn sich dieser durch Befüllung des Topfes absenkt. Allerdings hat sich eine herkömmliche Ausgestaltung mit einer flachen Kuppel als unzuverlässig herausgestellt, da große Belastungen durch ein mit Nachdruck erfolgendes manuelles oder maschinelles Befüllen des Pflanztopfs oder auch ein Einstecken von Stützstäben oder dgl. in den Pflanztopf zu einem Durchbeulen der Kuppel nach unten führen kann.

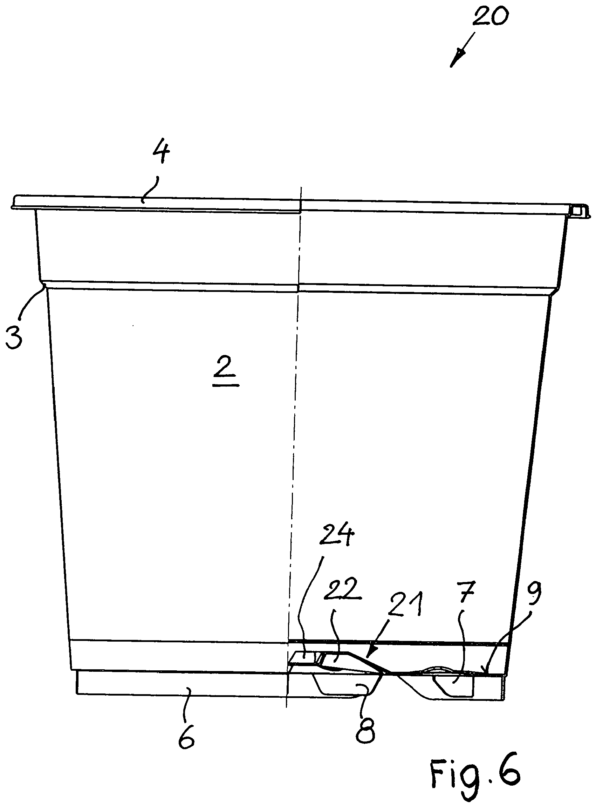

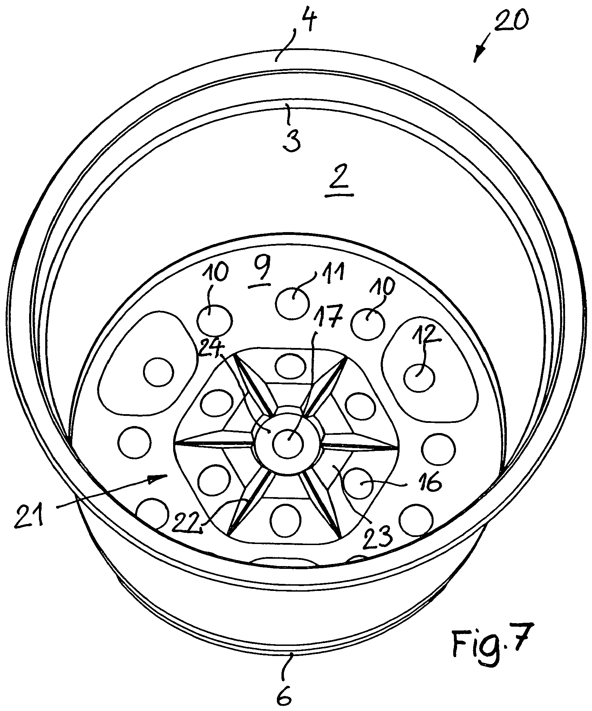

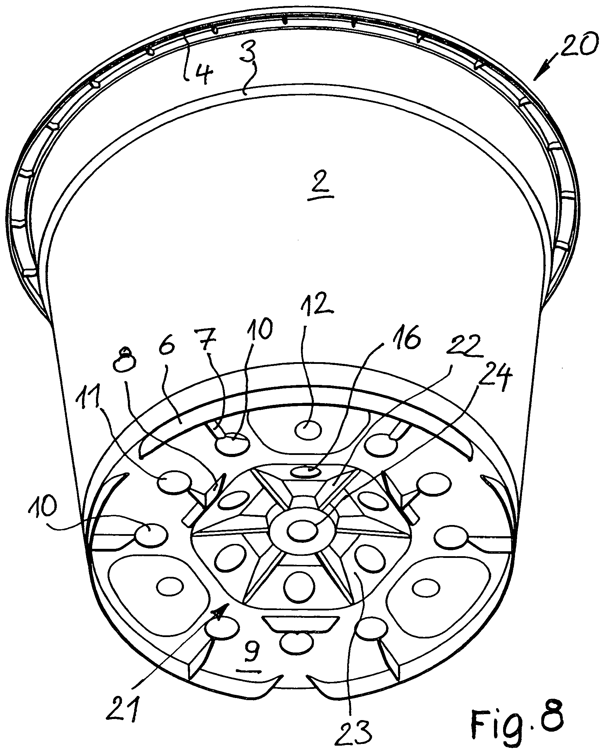

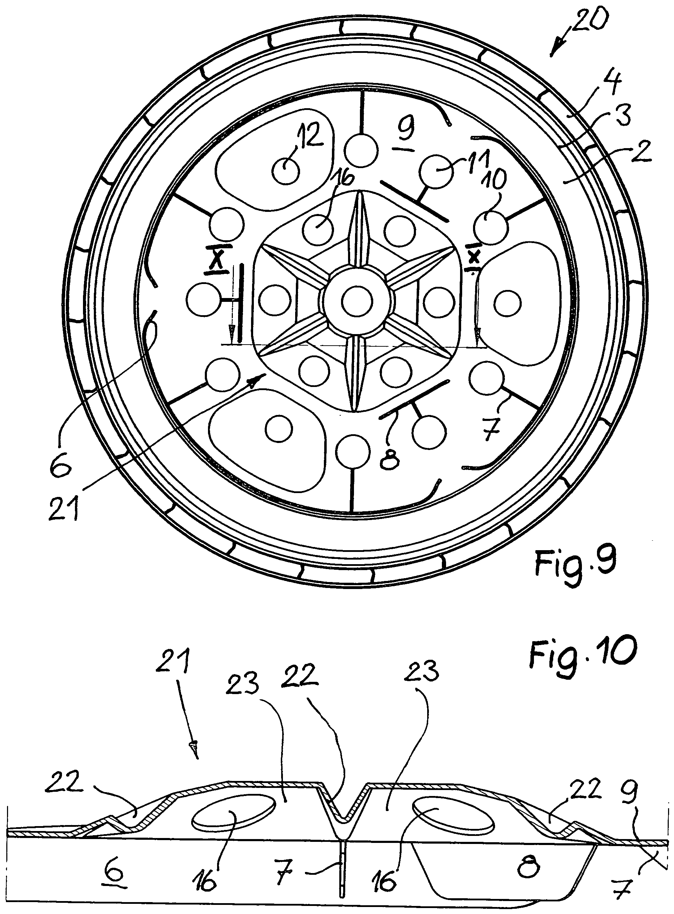

Dem wird wirkungsvoll dadurch abgeholfen, dass die Kuppel 13 bei dem Pflanztopf 1 durch Profilstreben 14 sternförmig ausgesteift ist, die als Unterzüge aus einem mittleren Bereich zum Umfangsbereich 9 verlaufen. Diese Profilstreben 14 setzen als aufrechte Stege unterseitig jeweils an der Kuppel 13 an und erstrecken sich horizontal bzw. flach auf die Höhe des Umfangsbereichs 9 abfallend zu diesem hin. Innenseitig stoßen sie an eine Einsenkung 15 der Kuppel 13 an, die hier nicht ganz auf die Höhe des Umfangsbereichs 9, aber auf die Höhe der Unterkanten der Profilstreben 14 herunterführt und diese auch untereinander verbindet. Damit ist eine hohe Belastbarkeit der Kuppel 13 gewonnen. Die Kuppel 13 weist noch zwischen den Profilstreben 14 Entwässerungslöcher 16 auf, die natürlich auch zur Belüftung des Pflanztopfs und darin enthaltener Wurzelballen beitragen. Auch die Einsenkung 15 ist mit einem Entwässerungsloch 17 versehen. Die erfindungsgemäße Ausführungsform des Pflanztopfs besteht in einem Pflanze topf 20, wie er in den Fig. 6 bis 10 veranschaulicht ist. Diese Ausführungsform ist lediglich in der Gestaltung einer Kuppel 21 mitsamt sternförmig angeordneten Profilstreben 22 von dem vorbeschriebenen Pflanztopf 1 abweichend, so dass übereinstimmende Teile des vorbeschriebenen Pflanztopfs auch mit übereinstimmenden Bezugsnummern gekennzeichnet sind. Bei dem Pflanztopf 20 wird die Kuppel 21 nicht durch einfache, hochkant stehende Stege als Profilstreben 14 ausgesteift sondern durch die oberseitig offenen Hohlprofile 22. Damit wird auch die Kuppelform unterbrochen und in Segmente 23 unterteilt, zwischen denen die Schalenflächen der Kuppel 21 jeweils in das oberseitig offene Hohlprofil 22 übergehen. Die Profilstege 22 sind V-förmig ausgebildet mit einer Unterkante, die etwa in Höhe des Umfangsbereichs 9 bzw. leicht zum Umfangsbereich 9 abfallend liegt. Zu diesem Umfangsbereich 9 laufen die Profilstege 22, ganz entsprechend den Profilstegen 14, aus. Innenseitig gehen die Profilstege 22 in die Umfangswand einer in der Grundform mit der Einsenkung 15 der erstbeschriebenen Ausführungsform übereinstimmende Einsenkung 24 über, wobei je-des Hohlprofil der Profilstege 22 offen in die Einsenkung 24 im Sinne einer unverzweigten Schalenform einmündet.

Eine solche Gestaltung mit Hohlprofilen 22 und mit segmentförmig zwischenliegenden Kuppelbereichen ist nicht nur im Spritzgußverfahren sondern auch im Tiefziehverfahren ausführbar. Die Fußstege sind dann allerdings auch als Hohlprofile oder - noppen auszuführen. Sie ermöglicht es aber in gleicher Weise wie die Gestaltung des erstbeschriebenen Pflanztopfs, mit den als Unterzügen wirkenden Profilstreben die Kuppel so zu versteifen, dass ein Durchbeulen in der Praxis ausgeschlossen werden kann.

Beide Gestaltungen sind für die Serienfertigung ohne größeren Aufwand in der Formherstellung und im Formgebungsverfahren und auch ohne größeren Materialaufwand zu realisieren, räumen aber eine Schwäche herkömmlicher Pflanztöpfe dieser Art und die damit einhergehenden Störungsanfälligkeiten aus.

## Patentansprüche

1. Pflanztopf (20) aus Kunststoff mit einer vorwiegend vertikal ausgerichteten
Wandung (2) und einem vorwiegend horizontal ausgerichteten und randseitig mit der Wandung (2) verbundenen Boden (5), der zumindest in einem inneren Teilbereich in Form einer Kuppel (21) aufgewölbt ist, wobei die Kuppel (21) durch Profilstreben (22) ausgesteift ist, **dadurch gekennzeichnet, dass** die Profilstreben (22) als Unterzüge aus einem mittleren Bereich (24) der Kuppel (21) zu zumindest Umfangsbereichen (9) der Kuppel (21) verlaufen, und als oberseitig offene Hohlprofile ausgebildet sind, die zwischen Sektoren (23) der Kuppel (21) eingeformt sind.

2. Pflanztopf nach Anspruch 1, **dadurch gekennzeichnet, dass** die Kuppel (21) punktsymmetrisch bezüglich des mittleren Bereichs (24) gestaltet ist.

3. Pflanztopf nach Anspruch 1 oder 2, **dadurch gekennzeichnet, dass** der mittlere Bereich als Einsenkung (24) in der Kuppel (21) in Höhe der Profilstreben (22) ausgebildet ist.

4. Pflanztopf nach Anspruch 3, **dadurch gekennzeichnet, dass** die Einsenkung (24) mit zumindest einem Loch (17) versehen ist.

5. Pflanztopf nach einem der Ansprüche 1 bis 4, **dadurch gekennzeichnet, dass** der Boden (5) zwischen der Kuppel (21) und der Wandung (2) einen im wesentlichen flachen Umfangsbereich (9) aufweist, in den die Profilstreben (22) auslaufen.

6. Pflanztopf nach Anspruch 5, **dadurch gekennzeichnet, dass** der Boden (5) im Außenbereich mit Löchern (10, 11, 12) versehen ist.

7. Pflanztopf nach einem der Ansprüche 1 bis 6, **dadurch gekennzeichnet, dass** der Boden (5) unterseitig mit Fußfortsätzen (6, 7, 8) zum Aufstellen ausgestattet ist.

8. Pflanztopf nach Anspruch 7 in Verbindung mit Anspruch 6, **dadurch gekennzeichnet, dass** die Fußfortsätze (6, 7, 8) zumindest randseitig an Löcher (10, 11, 12) herangeführt sind.

9. Pflanztopf nach Anspruch 8, **dadurch gekennzeichnet, dass** die Fußfortsätze (6, 7, 8) als Stege unterseitig am Boden angesetzt sind.

## Claims

1. Plant pot (20) made of plastics material, comprising a mainly vertical wall (2) and a mainly horizontal base (5) that is connected to the wall (2) at the edge and is arched in the form of a dome (21) at least in an inner portion, the dome (21) being reinforced by profiled struts (22), **characterised in that** the profiled struts (22) extend, as stringers, from a central region (24) of the dome (21) to at least peripheral regions (9) of the dome (21) and are formed as hollow profiles that are open at the top and are moulded between sectors (23) of the dome (21).

2. Plant pot according to claim 1, **characterised in that** the dome (21) is point-symmetrical with respect to the central region (24).

3. Plant pot according to either claim 1 or claim 2, **characterised in that** the central region is formed as a hollow (24) in the dome (21) at the height of the profiled struts (22).

4. Plant pot according to claim 3, **characterised in that** the hollow (24) is provided with at least one hole (17).

5. Plant pot according to any of claims 1 to 4, **characterised in that** the base (5) comprises a substantially planar peripheral region (9) between the dome (21) and the wall (2), in which region the profiled struts (22) end.

6. Plant pot according to claim 5, **characterised in that** the outer region of the base (5) is provided with holes (10, 11, 12).

7. Plant pot according to any of claims 1 to 6, **characterised in that** the underside of the base (5) is equipped with foot extensions (6, 7, 8) for standing.

8. Plant pot according to claim 7 in conjunction with claim 6, **characterised in that** the foot extensions (6, 7, 8) are brought close to holes (10, 11, 12) at least at the edges.

9. Plant pot according to claim 8, **characterised in that** the foot extensions (6, 7, 8) are positioned on the underside of the base as ribs.

## Revendications

1. Pot à plantes (20) en matière plastique comportant une paroi (2) principalement orientée verticalement et un fond (5) principalement orienté horizontalement et raccordé périphériquement à la paroi (2), le fond étant bombé au moins en partie dans une zone intérieure en forme de coupole (21), la coupole (21) étant rigidifiée par des montants profilés (22), **caractérisé en ce que** les montants profilés (22) s'étendent comme des traverses d'une région centrale (24) de la coupole à au moins des zones périphériques (9) de la coupole (21, et sont formés comme des profilés creux, ouverts du côté supérieur, qui sont formés entre des secteurs (23) de la coupole (21).

2. Pot à plantes selon la revendication 1, **caractérisé en ce que** la coupole (21) est symétrique par rapport à la zone centrale (24).

3. Pot à plantes selon la revendication 1 ou 2, **caractérisé en ce que** la zone centrale est formée comme une dépression (24) dans la coupole (21) au niveau des montants profilés (22) .

4. Pot à plantes selon la revendication 3, **caractérisé en ce que** la dépression (24) est pourvue d'au moins un trou (17) .

5. Pot à plantes selon l'une des revendications 1 à 4, **caractérisé en ce que** le fond (5) comporte, entre la coupole (21) et la paroi (2), une zone périphérique (9) sensiblement plane dans laquelle se terminent les montants profilés (22).

6. Pot à plantes selon la revendication 5, **caractérisé en ce que** le fond (5) est pourvu, dans la zone extérieure, de trous (10, 11, 12).

7. Pot à plantes selon l'une des revendications 1 à 6, **caractérisé en ce que** le fond (5) est équipé, du côté inférieur, de prolongements formant pieds (6, 7, 8) pour la mise en place verticale.

8. Pot à plantes selon la revendication 7 en liaison avec la revendication 6, **caractérisé en ce que** les prolongements formant pieds (6, 7, 8) sont approchés des trous (10, 11, 12) au moins périphériquement.

9. Pot à plantes selon la revendication 8, **caractérisé en ce que** les prolongements formant pieds (6, 7, 8) sont ajoutés au fond sous forme de nervures du côté inférieur.
